# EUROPÄISCHE PATENTSCHRIFT

(11) **EP 3 363 061 B1**
(45) Veröffentlichungstag und Bekanntmachung des Hinweises auf die Patenterteilung: **15.12.2021**
(21) Anmeldenummer: 16782082.8
(22) Anmeldetag: 18.10.2016
(51) Int. Cl.: H01M 50/213, H01M 50/264

(54) **TEMPERIEREINRICHTUNG FÜR EIN BATTERIESYSTEM**
TEMPERATURE-CONTROL DEVICE FOR A BATTERY SYSTEM
DISPOSITIF DE RÉGULATION DE TEMPÉRATURE POUR SYSTÈME DE BATTERIE

(30) Priorität: 18.10.2015 DE 102015013377
(43) Veröffentlichungstag der Anmeldung: 22.08.2018
(73) Patentinhaber: Raiffeisenlandesbank Oberösterreich Aktiengesellschaft, 4020 Linz (AT)
(72) Erfinder: KREISEL, Philip, 4240 Freistadt (AT); KREISEL JUN., Johann, 4240 Freistadt (AT); KREISEL, Markus, 4240 Freistadt (AT)
(74) Vertreter: Hübscher & Partner Patentanwälte GmbH
(86) Internationale Anmeldenummer: PCT/EP2016/074969
(87) Internationale Veröffentlichungsnummer: WO 2017/067923

(56) Entgegenhaltungen:
- WO-A1-2016/099606
- DE-A1-102010 033 188
- DE-A1-102011 017 375
- DE-A1-102014 112 628
- US-A1- 2015 188 203

## Beschreibung

### Technisches Gebiet

Die vorliegende Erfindung betrifft ein Batteriesystem mit mehreren Batteriezellen und einer Temperiereinrichtung, zumindest umfassend einen quaderförmigen Hohlkörper mit zumindest einer Anschlusseinrichtung zum Zuführen und zumindest einer Anschlusseinrichtung zum Abführen eines gesondert temperierten Fluids, einer Vielzahl an regelmäßig angeordneten und identisch ausgebildeten, sich von einer ersten Körperoberfläche zu einer zweiten Körperoberfläche hin erstreckenden Durchbrüchen, wobei von jedem Durchbruch eine zylinderförmige Batteriezelle aufgenommen ist, sodass ein fluiddichter Flüssigkeitsraum gebildet wird.

Der Anmelder hat die Anmeldung/das Patent für Deutschland unter Bezugnahme auf die DE 102014112628 A1 freiwillig eingeschränkt und gesonderte Patentansprüche für diesen Staat vorgelegt.

Batteriesysteme, bzw. ein Verbund an mehreren Batteriesystemen, z.T. auch als Batteriepack bezeichnet, kommen bei mobilen Anwendungen, zum Beispiel bei Elektrokraftfahrzeugen oder Hybridfahrzeugen, als wiederaufladbare elektrische Energiespeicher, zum Beispiel mit Lithium-Ionen-Akkumulatoren, Lithium-Polymer-Akkumulatoren oder Nickel-Metallhybrid-Akkumulatoren, zum Einsatz. Bei vollelektrischen Antrieben werden, unter anderem um Größe und Gewicht des Batteriesystems weiter zu reduzieren, zum Teil auch Lithium-Ionen-Hochspannungsbatterien verwendet.

Gattungsgemäße Batteriesysteme müssen in einem bestimmten Temperaturfenster betrieben werden. Der Ablauf elektrochemischer Vorgänge in einer Batterie wird nämlich entscheidend von den Betriebsbedingungen der Batterie und der Temperatur beeinflusst. Höhere Temperaturen verbessern die Elektronen- oder lonenmobilität, reduzieren jedoch die innere Impedanz der Batteriezelle und steigern deren Kapazität. Höhere Temperaturen können jedoch auch ungewollte oder irreversibel ablaufende chemische Reaktionen und/oder einen Verlust des Elektrolyten herbeiführen, wodurch eine dauerhafte Schädigung oder ein vollständiger Ausfall der Batterie auftreten kann. Wiederholte Temperaturänderungen können die Batterie ebenfalls schädigen.

Ab einer Betriebstemperatur von +40 °C verringert sich die Lebensdauer, während unterhalb von -10 °C der Wirkungsgrad nachlässt und die Leistung sinkt. Darüber hinaus darf der Temperaturunterschied zwischen den einzelnen Zellen 5 bis 10 K nicht überschreiten. Kurzzeitige Spitzenbelastungen iVm hohen Strömen wie Rekuperation oder Boosten führen zu einer nicht unerheblichen Erwärmung der Zellen. Zusätzlich können hohe Außentemperaturen, beispielsweise in den Sommermonaten, dazu beitragen, dass die Temperatur in dem Batteriesystem einen kritischen Wert erreicht.

### Stand der Technik

Aus der US 2015 210 184 A1 ist ein luftgekühltes Batteriepack bekannt. Das Batteriepack umfasst eine Mehrzahl von Batteriezellen, die in einer Mehrzahl von Modulen angeordnet sind, sodass Kühlkanäle zwischen benachbarten Zellen in jedem der Module definiert werden.

Aus der DE 10 2011 082 991 A1 ist eine Batterie, mit einem Batteriegehäuse, Temperierelemente und einer Lithium-Ionen-Zelle, die in direktem Kontakt mit einem der Temperierelemente steht, bekannt.

Ferner ist ein Batteriepack mit einer Anzahl von Batteriemodulen mit Batteriezellen und mindestens einer Temperiereinrichtung, die dadurch gekennzeichnet ist, dass die Batteriezellen durch ein Material mit temperaturabhängiger Wärmeleitfähigkeit mit der mindestens einen Temperiereinrichtung gekoppelt sind, aus der DE 10 2014 205 133 A1 bekannt.

Weitere aus dem Stand der Technik bekannte Möglichkeiten zur Temperierung gattungsgemäßer Batteriesysteme sind beispielsweise Luft aus dem klimatisierten Fahrzeuginnenraum anzusaugen, eine spezielle, in der Batteriezelle eingeschlossene Verdampferplatte an die im Fahrzeug vorhandene Klimaanlage anzuschließen, oder eine in dem Batterieblock eingebaute Kühlplatte mit Kühlmittel zu durchströmen (vgl. hierzu Behr/Hella "Thermomanagement in Hybridfahrzeugen"; BEHR HELLA SERVICE GmbH, Schwäbisch Hall).

Sämtlichen aus dem Stand der Technik bekannten Kühlkonzepten mangelt es an einer schnellen und insbesondere gleichmäßigen Abführung der entstehenden Wärme, insbesondere an einem optimierten Temperaturmanagement. Dies gilt insbesondere für extreme Leistungsbereiche, d.h. bei einer hohen Leistungsabgabe bzw. einer hohen Leistungsaufnahme der Batteriezelle und bei sehr hohen Umgebungstemperaturen.

Auch das Problem des thermischen Ungleichgewichts im Zellverbund, das zu unterschiedlichen Leistungsdichten und damit wiederum zu einem thermischen Ungleichgewicht innerhalb eines Batterieblocks führt (selbstschädigendes System), ist nicht zufriedenstellend gelöst.

### Darstellung der Erfindung

Aufgabe der vorliegenden Erfindung ist es, eine verbesserte, zumindest aber alternative Temperiereinrichtung für ein Batteriesystem bereitzustellen. Insbesondere ist es Aufgabe der Erfindung, für ein thermisches Gleichgewicht innerhalb eines Batteriesystems zu sorgen.

Erfindungsgemäß wird eine Temperiereinrichtung für ein Batteriesystem vorgeschlagen, die zumindest einen quaderförmigen Hohlkörper mit zumindest einer Anschlusseinrichtung zum Zuführen und zumindest einer Anschlusseinrichtung zum Abführen eines gesondert temperierten Fluids umfasst; der quderförmige Hohlkörper weist eine Vielzahl regelmäßig angeordneter und identisch ausgebildeter, sich von einer ersten Körperoberfläche zu einer zweiten Körperoberfläche hin erstreckender Durchbrüche auf, wobei von jedem Durchbruch eine zylinderförmige Batteriezelle aufgenommen ist, so dass ein fluiddichter Flüssigkeitsraum gebildet wird.

Erfindungswesentlich ist dabei, dass sich der Hohlkörper unter Ausschluss des Zellkopfes und des Zellbodens über eine Höhe h von > 20 bis < 100%, der Gesamthöhe des Batteriesystems erstreckt. Die Batteriezellen werden in dem Flüssigkeitsraum von dem gesondert temperierten Fluid umspült. Durch diesen unmittelbaren, vollflächigen Kontakt einer jeden zylinderförmigen Batteriezelle des Batteriesystems mit dem temperierten Fluid kann das System aktiv innerhalb eines optimalen Betriebstemperaturbereiches gehalten werden.

Somit ist es durch die vorliegende Erfindung nicht nur möglich, entstehende Wärme am Zellenmantel der Batteriezellen schnell abzuführen, sondern auch ein thermisches Ungleichgewicht im Batteriezellenverbund zu vermeiden.

Um einen fluiddichten Flüssigkeitsraum zu gewährleisten, ist es bevorzugt, ein Dichtelement vorzusehen, das die zylinderförmigen Batteriezellen umschließt. Ein derartiges Dichtelement kann beispielsweise ein an jedem der Durchbrüche ausgebildeter Dichtring sein, der die Zellen über den Umfang an der oberen und unteren Zellmantelposition dichtend verschließt. Vorzugsweise sind die Dichtelemente jedoch einteilig ausgebildete, mit Durchbrüchen, entsprechen denen des quaderförmige Hohlkörper versehene Dichtplatten.

Diese Dichtplatten sind einteilig, beispielsweise aus einem TPE, EPDM oder einem anderen elastomeren, bevorzugt thermoplastischen, Kunststoff, gefertigt, und sind vorzugsweise mittels 2K-Techik auf den Oberflächen des quaderförmigen Hohlkörpers aufgebracht. Denkbar ist auch, dass die Dichtplatten auf dem quaderförmigen Hohlkörper mittels lösbarer Verbindungstechnik, beispielsweise verschnappt oder verschraubt, aufgebracht sind. Vorzugsweise werden dabei die zylinderförmigen Batteriezellen von den Dichtelementen der beiden Dichtplatten am jeweiligen Umfang der Zelle so umschlossen, dass sie vollständig abdichten.

Der quaderförmige Hohlkörper ist vorzugsweise einteilig aus Kunststoff, beispielsweise POM, gefertigt. Um in der erfindungsgemäßen Temperiereinrichtung möglichst viele zylinderförmige Batteriezellen unterbringen zu können, d.h. eine möglichst raumsparende Anordnung der Batteriezellen zu gewährleisten, sind die Durchbrüche vorzugsweise in Form einer dichtesten Kreispackung angeordnet.

In einer Anordnung, in der von jedem Durchbruch eine zylinderförmige Batteriezelle aufgenommen ist, ist jede Reihe von Batteriezellen zur benachbarten Reihe um eine halbe Zellbreite versetzt angeordnet (1/2 Durchmesser der Batteriezelle). Zwischen den einzelnen Zellen einer Reihe ist ein minimaler Abstand (S). Durch diesen Abstand und die Anordnung als dichteste Kreispackung ist gewährleistet, dass das gesondert temperierte Fluid jede Batteriezelle umströmen kann. Auch eine Durchströmung des Flüssigkeitsraums mit dem temperierten Fluid ist hierdurch sichergestellt.

Erfindungsgemäß erstreckt sich der quaderförmige Hohlkörper unter Ausschluss des Zellkopfes und des Zellbodens über eine Höhe h von > 20 bis < 100% der Gesamthöhe H des Batteriesystems. Die Höhe h ist an die Anforderung an das Temperaturmanagement, insbesondere an die Kühlleistung, anzupassen, und wird bestimmt aus dem Gleichgewicht zwischen thermischen Anforderungen und dem Batteriegewicht, das mit zunehmender Hohlkörperhöhe steigt.

Über zumindest eine Anschlusseinrichtung zum Zuführen und zumindest eine weitere Anschlusseinrichtung zum Abführen eines gesondert temperierten Fluids wird das Batteriesystem, umfassend eine Vielzahl zylinderförmiger Batteriezellen, temperiert, dergestalt, dass in dem fluiddichten Flüssigkeitsraum die Zellwände der einzelnen Batteriezellen von dem Fluid umströmt werden.

Da der Flüssigkeitsraum nach oben abgedichtet ist, kommt das Fluid, insbesondere die Kühlflüssigkeit, nicht mit elektrisch sensiblen Bereichen des Batteriesystems in Kontakt.

Ein inhomogenes Altern einzelner Batteriezellen innerhalb eines Batteriesystems bewirkt, dadurch, dass diese unterschiedlichen Temperaturen ausgesetzt sind, eine beschleunigte, überdurchschnittliche Alterung des Batteriesystems, und ferner eine reduzierte Kapazität. In einer bevorzugten Ausführungsform wird daher das gesondert temperierte Fluid, insbesondere die Kühlflüssigkeit, aktiv durch die Temperiereinrichtung gepumpt. Damit kann zuverlässig verhindert werden, dass eine Batteriezelle, die an einer Außenseite des quaderförmigen Hohlkörpers angeordnet ist, einer anderen thermischen Umgebung ausgesetzt ist, als eine, die beispielsweise zwischen anderen Batteriezellen, insbesondere mittig angeordnet ist.

Vorzugsweise wird das Fluid über eine Heiz- und/oder Kühleinrichtung im Kreis gepumpt. In einer besonders bevorzugten Ausführungsform wird das Fluid durch mehrere hintereinander angeordnete erfindungsgemäße Temperiereinrichtungen und zumindest einer Heiz- und/oder Kühleinrichtung im Kreis gepumpt. Als gesondert temperiertes Fluid wird insbesondere eine Kühlflüssigkeit, wie beispielsweise Wasser, verstanden, die über eine Heiz- und/oder Kühleinrichtung aktiv temperiert wird.

Durch eine Pumpeneinrichtung, Verbindungsleitungen zwischen zwei oder mehreren Temperiereinrichtung und einer Heiz- und/oder Kühleinrichtung kann ein Batteriepack, das aus mehreren Batteriesystemen besteht temperiert werden.

Mittels der erfindungsgemäßen Temperiereinrichtung und dem gesondert temperierten Fluid werden Temperaturunterschiede zwischen den einzelnen Batteriezellen von 5 bis 10 K nicht überschritten. Zudem kann das Batteriesystem im optimalen, insbesondere von den Batterieherstellern vorgegebenen Temperaturfenster betrieben werden. Aus einer aktiven Kühlung bzw. Erwärmung der einzelnen Batteriezellen mittels der erfindungsgemäßen Temperiereinrichtung nicht nur innerhalb der vorgegebenen Betriebstemperaturen, sondern in einem weiter begrenzten Temperaturbereich, resultiert eine optimierte Leistungsausbeute.

Weitere Merkmale und Vorteile der vorliegenden Erfindung werden dem Fachmann aus der nachfolgenden Beschreibung einer Ausführungsform, unter Bezugnahme auf die beigefügten Zeichnungen ersichtlich.

### Kurze Beschreibung der Zeichnung

Die Figuren zeigen:
- Fig. 1: eine Temperiereinrichtung für ein Batteriesystem,
- Fig. 2: eine Dichtplatte,
- Fig. 3: einen quaderförmigen Hohlkörper von der Seite und von oben betrachtet und
- Fig. 4: ein Batteriepack umfassend drei Temperiereinrichtungen.

### Weg zur Ausführung der Erfindung

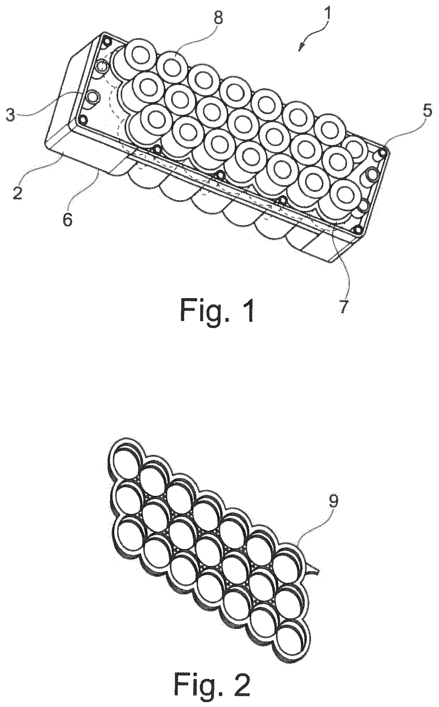

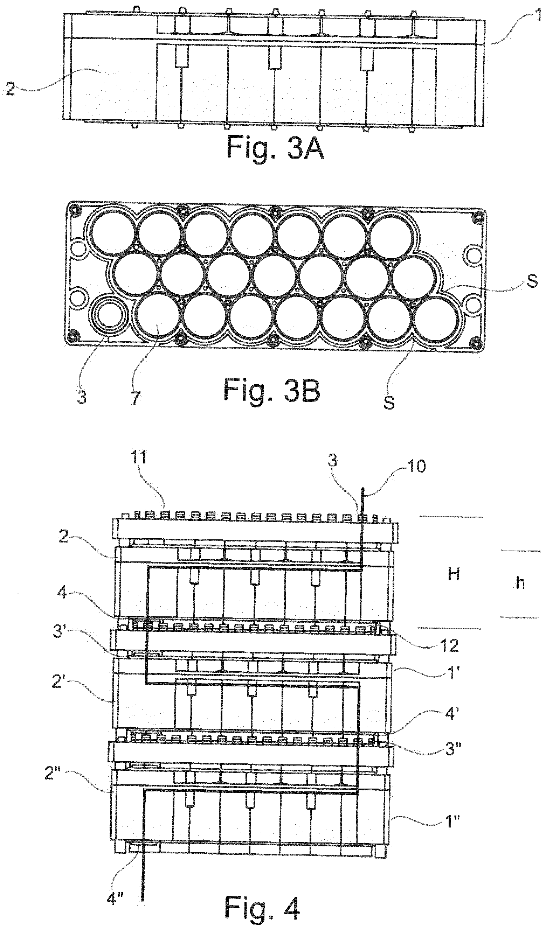

Figur 1 zeigt eine Temperiereinrichtung (1) für ein Batteriesystem mit einem quaderförmigen Hohlkörper (2) mit zumindest einer Anschlusseinrichtung (3) zum Zuführen und zumindest einer Anschlusseinrichtung (4, vgl. Figur 4) zum Abführen eines gesondert temperiertem Fluids. In einer Vielzahl regelmäßig angeordneter und identisch ausgebildeter, sich von einer ersten Körperoberfläche (5) zu einer zweiten Körperoberfläche (6, Figur 3A) hin erstreckender Durchbrüche (7) sind zylinderförmige Batteriezellen (8) angeordnet. Die Durchbrüche (7) resp. die Batteriezellen (8) die sind in Form einer dichtesten Kreispackung angeordnet.

Figur 2 zeigt eine Dichtplatte (9) aus einem elastomeren, bevorzugt thermoplastischen Kunststoff, mit einer Vielzahl an regelmäßig angeordneten und identisch ausgebildeten Durchbrüchen (7'). Um einen fluiddichten Flüssigkeitsraum zu gewährleisten ist die Dichtplatte (9), vorzugsweise mittels 2K-Technik auf den Oberflächen (5, 6) des quaderförmigen Hohlkörpers (2) aufgebracht.

Figur 3 zeigt den quaderförmigen Hohlkörper (2) von der Seite in einer Schnittdarstellung (3A) bzw. von oben (3B), ebenfalls in einer Schnittdarstellung. Man erkennt drei versetzt angeordnete Reihen, mit jeweils sieben Durchbrüchen (7). In jedem Durchbruch (7) ist im zusammengebauten Zustand eine zylinderförmige Batteriezelle (8) aufgenommen, dergestalt, dass jede Zelle zur Nachbarzelle einen minimalen Abstand (S) hat. Dieser Abstand (S) und die Anordnung als dichteste Kreispackung gewährleistet, dass jede einzelne Batteriezelle von dem gesondert temperiertem Fluid umströmt zu werden kann. Das Fluid wird über die Anschlusseinrichtung (3) dem quaderförmigen Hohlkörper (2) zugeführt, und verlässt diesen an dessen Unterseite über die Anschlusseinrichtung (9).

Figur 4 zeigt drei hintereinander geschaltete Temperiereinrichtungen (1, 1', 1 ") als Teil eines Batteriepacks, wobei die schwarze Linie (10) den Weg des Fluids darstellt. Über die Anschlussvorrichtung (3) strömt das Fluid in die erste Temperiereinrichtung (1), um diese über die Anschlusseinrichtung (9) wieder zu verlassen; anschließend strömt das Fluid über die Anschlusseinrichtung (3') in die zweite Temperiereinrichtung (1'), durchströmt diese und verlässt sie über die Anschlusseinrichtung (9') wieder. Dies setzt sich für die dritte und gegebenenfalls folgende Temperiereinrichtung fort. Der Hohlkörper (2) erstreckt sich über eine Höhe h, die kleiner als die Gesamthöhe H des Batteriesystems ist. Die sensiblen Bereiche des Batteriesystems, insbesondere der Zellkopf (11) und der Zellboden (12), sind erfindungsgemäß von der Temperiereinrichtung (1) ausgeschlossen.

## Patentansprüche (Patentansprüche für folgende(n) Vertragsstaat(en): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Batteriesystem mit mehreren Batteriezellen und einer Temperiereinrichtung (1), zumindest umfassend einen quaderförmigen Hohlkörper (2) mit zumindest einer Anschlusseinrichtung (3) zum Zuführen und zumindest einer Anschlusseinrichtung (4) zum Abführen eines gesondert temperierten Fluids, eine Vielzahl regelmäßig angeordneter und identisch ausgebildeter, sich von einer ersten Körperoberfläche (5) zu einer zweiten Körperoberfläche (6) hin erstreckender Durchbrüche (7), wobei von jedem Durchbruch (7) eine zylinderförmige Batteriezelle (8) aufgenommen ist, sodass ein fluiddichter Flüssigkeitsraum gebildet wird, **dadurch gekennzeichnet, dass** sich der Hohlkörper (2) unter Ausschluss des Zellkopfes (11) und des Zellbodens (12) über eine Höhe h von >20 bis <100%, der Gesamthöhe H des Batteriesystems erstreckt, und dass die Batteriezellen (8) in unmittelbarem Kontakt mit dem temperierten Fluid stehen.

2. Batteriesystem nach Patentanspruch 1, **dadurch gekennzeichnet, dass** jeder Durchbruch (7) ein Dichtelement (9) aufweist, das die zylinderförmigen Batteriezellen (8) umschließt.

3. Batteriesystem nach Patentanspruch 1 oder 2, **dadurch gekennzeichnet, dass** der quaderförmige Hohlkörper (2) einteilig aus Kunststoff, beispielsweise POM, gefertigt ist.

4. Batteriesystem nach Patentanspruch 1, 2 oder 3, **dadurch gekennzeichnet, dass** Durchbrüche (7) in Form einer dichtesten Kreispackung angeordnet sind.

5. Batteriesystem nach einem der vorstehenden Ansprüche, **dadurch gekennzeichnet, dass** die einzelnen Batteriezellen voneinander beabstandet sind.

6. Batteriesystem nach einem der vorstehenden Ansprüche, **dadurch gekennzeichnet, dass** das gesondert temperierte Fluid über eine Heiz- und/oder Kühleinrichtung im Kreis gepumpt wird.

7. Batteriepack mit hintereinander geschalteten Batteriesystemen nach einem der Ansprüche 1 bis 6, **dadurch gekennzeichnet, dass** das gesondert temperierte Fluid über Temperiereinrichtungen (1, 1', 1"), zumindest eine Pumpeinrichtung und eine Heiz- und/oder Kühleinrichtung hinweg im Kreis geführt wird.

## Patentansprüche (Patentansprüche für folgende(n) Vertragsstaat(en): DE)

1. Batteriesystem mit mehreren Batteriezellen und einer Temperiereinrichtung (1), zumindest umfassend einen quaderförmigen Hohlkörper (2) mit zumindest einer Anschlusseinrichtung (3) zum Zuführen und zumindest einer Anschlusseinrichtung (4) zum Abführen eines gesondert temperierten Fluids, eine Vielzahl regelmäßig angeordneter und identisch ausgebildeter, sich von einer ersten Körperoberfläche (5) zu einer zweiten Körperoberfläche (6) hin erstreckender Durchbrüche (7), wobei von jedem Durchbruch (7) eine zylinderförmige Batteriezelle (8) aufgenommen ist, sodass ein fluiddichter Flüssigkeitsraum gebildet wird, **dadurch gekennzeichnet, dass** sich der Hohlkörper (2) unter Ausschluss des Zellkopfes (11) und des Zellbodens (12) über eine Höhe h von >20 bis <100%, der Gesamthöhe H des Batteriesystems erstreckt, dass die Batteriezellen (8) in unmittelbarem Kontakt mit dem temperierten Fluid stehen und dass das gesondert temperierte Fluid über eine Heiz- und/oder Kühleinrichtung im Kreis gepumpt wird.

2. Batteriesystem nach Anspruch 1, **dadurch gekennzeichnet, dass** jeder Durchbruch (7) ein Dichtelement aufweist, das die zylinderförmigen Batteriezellen (8) umschließt.

3. Batteriesystem nach Anspruch 2, **dadurch gekennzeichnet, dass** die Dichtelemente einteilig ausgebildete, mit Durchbrüchen entsprechend denen des quaderförmigen Hohlkörpers (2) versehene Dichtplatten (9) sind.

4. Batteriesystem nach Anspruch 3, **dadurch gekennzeichnet, dass** die Dichtplatten (9) aus einem elastomeren und thermoplastischen Kunststoff gefertigt und mittels 2K-Techik auf den Oberflächen (5, 6) des quaderförmigen Hohlkörpers (2) aufgebracht sind.

5. Batteriesystem nach einem der Ansprüche 1 bis 4, **dadurch gekennzeichnet, dass** der quaderförmige Hohlkörper (2) einteilig aus Kunststoff, beispielsweise POM, gefertigt ist.

6. Batteriesystem nach einem der Ansprüche 1 bis 5, **dadurch gekennzeichnet, dass** Durchbrüche (7) in Form einer dichtesten Kreispackung angeordnet sind.

7. Batteriesystem nach einem der vorstehenden Ansprüche, **dadurch gekennzeichnet, dass** die einzelnen Batteriezellen voneinander beabstandet sind.

8. Batteriepack mit hintereinander geschalteten Batteriesystemen nach einem der Ansprüche 1 bis 7, **dadurch gekennzeichnet, dass** das gesondert temperierte Fluid über Temperiereinrichtungen (1, 1', 1"), zumindest eine Pumpeinrichtung und eine Heiz- und/oder Kühleinrichtung hinweg im Kreis geführt wird.

## Claims (Claims for the following Contracting State(s): DE)

1. Battery system having a plurality of battery cells and a temperature-control device (1), at least comprising a cuboid-shaped hollow body (2) having at least one connection device (3) for supplying a separately temperature-controlled fluid and at least one connection device (4) for discharging said fluid, a multiplicity of regularly arranged and identically formed apertures (7) extending from a first body surface (5) to a second body surface (6), wherein a cylindrical battery cell (8) is received in each aperture (7) and so a fluidtight liquid chamber is formed, **characterised in that** the hollow body (2), excluding the cell head (11) and the cell base (12), extends over a height h of > 20 to < 100% of the total height H of the battery system, **in that** the battery cells (8) are in direct contact with the temperature-controlled fluid, and **in that** the separately temperature-controlled fluid is pumped in a circulating manner via a heating and/or cooling device.

2. Battery system as claimed in claim 1, **characterised in that** each aperture (7) has a sealing element which surrounds the cylindrical battery cells (8).

3. Battery system as claimed in claim 2, **characterised in that** the sealing elements are sealing plates (9) which are formed in one piece and are provided with apertures corresponding to those of the cuboid-shaped hollow body (2).

4. Battery system as claimed in claim 3, **characterised in that** the sealing plates (9) are produced from an elastomeric and thermoplastic synthetic material and are applied to the surfaces (5, 6) of the cuboid-shaped hollow body (2) by means of 2K technology.

5. Battery system as claimed in any one of claims 1 to 4, **characterised in that** the cuboid-shaped hollow body (2) is formed in one piece from synthetic material, e.g. POM.

6. Battery system as claimed in any one of claims 1 to 5, **characterised in that** apertures (7) are arranged in a densest circular packing form.

7. Battery system as claimed in any one of the preceding claims, **characterised in that** the individual battery cells are spaced apart from each other.

8. Battery pack having battery systems as claimed in any one of claims 1 to 7 connected in series, **characterised in that** the separately temperature-controlled fluid is guided in a circulating manner via temperature-control devices (1, 1', 1"), at least one pumping device and a heating and/or cooling device.

## Claims (Claims for the following Contracting State(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Battery system having a plurality of battery cells and a temperature-control device (1), at least comprising a cuboid-shaped hollow body (2) having at least one connection device (3) for supplying a separately temperature-controlled fluid and at least one connection device (4) for discharging said fluid, a multiplicity of regularly arranged and identically formed apertures (7) extending from a first body surface (5) to a second body surface (6), wherein a cylindrical battery cell (8) is received in each aperture (7) and so a fluidtight liquid chamber is formed, **characterised in that** the hollow body (2), excluding the cell head (11) and the cell base (12), extends over a height h of > 20 to < 100% of the total height H of the battery system, and **in that** the battery cells (8) are in direct contact with the temperature-controlled fluid.

2. Battery system as claimed in claim 1, **characterised in that** each aperture (7) has a sealing element (9) which surrounds the cylindrical battery cells (8).

3. Battery system as claimed in claim 1 or 2, **characterised in that** the cuboid-shaped hollow body (2) is formed in one piece from synthetic material, e.g. POM.

4. Battery system as claimed in claim 1, 2 or 3, **characterised in that** apertures (7) are arranged in a densest circular packing form.

5. Battery system as claimed in any one of the preceding claims, **characterised in that** the individual battery cells are spaced apart from each other.

6. Battery system as claimed in any one of the preceding claims, **characterised in that** the separately temperature-controlled fluid is pumped in a circulating manner via a heating and/or cooling device.

7. Battery pack having battery systems as claimed in any one of claims 1 to 6 connected in series, **characterised in that** the separately temperature-controlled fluid is guided in a circulating manner via temperature-control devices (1, 1', 1"), at least one pumping device and a heating and/or cooling device.

## Revendications (Revendications pour l'(les) Etat(s) contractant(s) suivant(s): DE)

1. Système de batterie avec plusieurs piles de batterie et un dispositif de tempérage (1), comprenant au moins un corps creux parallélépipédique (2) avec au moins un dispositif de raccordement (3) pour l'admission et au moins un dispositif de raccordement (4) pour l'évacuation d'un fluide tempéré à part, une multitude d'orifices (7) disposés régulièrement et de forme identique, s'étendant d'une première surface du corps (5) à une deuxième surface du corps (6), chaque orifice (7) abritant une pile de batterie cylindrique (8), de sorte qu'un espace rempli de liquide étanche aux fluides est formé, **caractérisé en ce que** le corps creux (2), à l'exclusion de la tête de piles (11) et du fond de piles (12), s'étend sur une hauteur h supérieure à 20% et inférieure à 100% de la hauteur totale H du système de batterie, que les piles de batterie (8) sont en contact direct avec le fluide tempéré et que le fluide tempéré à part est pompé par un dispositif de chauffage et/ou de refroidissement dans le circuit.

2. Système de batterie selon la revendication 1, **caractérisé en ce que** chaque orifice (7) présente un élément d'étanchéité (9) qui entoure les piles de batterie cylindriques (8).

3. Système de batterie selon la revendication 2, **caractérisé en ce que** les éléments d'étanchéité sont constitués d'une pièce, avec des orifices correspondant à leurs plaques d'étanchéité (9) dotées du corps creux parallélépipédique (2).

4. Système de batterie selon la revendication 3, **caractérisé en ce que** les plaques d'étanchéité (9) sont fabriquées dans un élastomère thermoplastique et appliquées au moyen d'une technologie 2K sur les surfaces (5, 6) du corps creux parallélépipédique (2).

5. Système de batterie selon une des revendications 1 à 4, **caractérisé en ce que** le corps creux parallélépipédique (2) est fabriqué d'une pièce en matière plastique, par exemple en POM.

6. Système de batterie selon une des revendications 1 à 5, **caractérisé en ce que** les orifices (7) sont disposés sous la forme d'un arrangement de cercles le plus dense possible.

7. Système de batterie selon une des revendications précédentes, **caractérisé en ce que** les piles de batterie sont espacées les unes des autres.

8. Pack de batteries avec des systèmes de batterie selon une des revendications 1 à 7, **caractérisé en ce que** le fluide tempéré à part est guidé tout au long du circuit par des dispositifs de tempérage (1, 1', 1"), au moins un dispositif de pompage et un dispositif de chauffage et/ou de refroidissement.

## Revendications (Revendications pour l'(les) Etat(s) contractant(s) suivant(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Système de batterie avec plusieurs piles de batterie et un dispositif de tempérage (1), comprenant au moins un corps creux parallélépipédique (2) avec au moins un dispositif de raccordement (3) pour l'admission et au moins un dispositif de raccordement (4) pour l'évacuation d'un fluide tempéré à part, une multitude d'orifices (7) disposés régulièrement et de forme identique, s'étendant d'une première surface du corps (5) à une deuxième surface du corps (6), chaque orifice (7) abritant une pile de batterie cylindrique (8), de sorte qu'un espace rempli de liquide étanche aux fluides est formé, **caractérisé en ce que** le corps creux (2), à l'exclusion de la tête de piles (11) et du fond de piles (12), s'étend sur une hauteur h supérieure à 20% et inférieure à 100% de la hauteur totale H du système de batterie et que les piles de batterie (8) sont en contact direct avec le fluide tempéré.

2. Système de batterie selon la revendication 1, **caractérisé en ce que** chaque orifice (7) présente un élément d'étanchéité (9) qui entoure les piles de batterie cylindriques (8).

3. Système de batterie selon la revendication 1 ou 2, **caractérisé en ce que** le corps creux parallélépipédique (2) est fabriqué d'une pièce en plastique, par exemple en POM.

4. Système de batterie selon la revendication 1, 2 ou 3, **caractérisé en ce que** les orifices (7) sont disposés sous la forme d'un arrangement de cercles le plus dense possible.

5. Système de batterie selon une des revendications précédentes, **caractérisé en ce que** les piles de batterie sont espacées les unes des autres.

6. Système de batterie selon une des revendications précédentes, **caractérisé en ce que** le fluide tempéré à part est pompé par un dispositif de chauffage et/ou de refroidissement dans le circuit.

7. Pack de batteries avec des systèmes de batterie selon une des revendications 1 à 6 connectés les uns derrière les autres, **caractérisé en ce que** le fluide tempéré à part est guidé tout au long du circuit par des dispositifs de tempérage (1, 1', 1"), au moins un dispositif de pompage et un dispositif de chauffage et/ou de refroidissement.
